# EUROPÄISCHE PATENTSCHRIFT

(11) **EP 0 923 267 B1**
(45) Veröffentlichungstag und Bekanntmachung des Hinweises auf die Patenterteilung: **11.03.2009**
(21) Anmeldenummer: 98114286.2
(22) Anmeldetag: 30.07.1998
(51) Int. Cl.: H04Q 11/04

(54) **Verfahren zur Übertragung digitaler Daten**
Method for transmitting digital data
Procédé de transmission de données numériques

(30) Priorität: 11.12.1997 DE 19755054
(43) Veröffentlichungstag der Anmeldung: 16.06.1999
(73) Patentinhaber: Ericsson AB, Stockholm (SE)
(72) Erfinder: Götzer, Martin, 71522 Backnang (DE); Mayer, Ralf, 71546 Aspach (DE); Schroeder, Jürgen, 71549 Auenwald (DE)
(74) Vertreter: Manitz, Finsterwald & Partner GbR

(56) Entgegenhaltungen:
- EP-A- 0 275 679
- EP-A- 0 468 802
- DE-C- 19 532 421
- US-A- 5 677 905
- SOSNOSKY J ET AL: "A CURRENT BELLCORE VIEW OF SONET ATM VP RINGS" GLOBECOM '95. IEEE GLOBAL TELECOMMUNICATIONS CONFERENCE, SINGAPORE, NOV. 14 - 16, 1995, Bd. 1, 14. November 1995 (1995-11-14), Seiten 39-44, XP000621452 INSTITUTE OF ELECTRICAL AND ELECTRONICS ENGINEERS
- HUTERER M: "ATM ON SDH" ALCATEL TELECOMMUNICATIONS REVIEW, 1. Januar 1997 (1997-01-01), Seiten 38-46, XP000685832 ISSN: 1267-7167

## Beschreibung

Die Erfindung betrifft ein Verfahren der im Oberbegriff des Anspruchs 1 angegebenen Art. Ein derartiges Verfahren ist in Auterer, M.: "ATM on SDH", Alcatel Telecommunications Review - ist Quarter 1997, Seiten 38-46, XP 000 685 832 ISSN: 1267-7107, beschrieben.

### Stand der Technik

Zur Übertragung digitaler Daten zwischen wenigstens zwei Teilnehmern ist bekannt, die Teilnehmer über Netzwerkeinheiten mit einem Zugangsnetz zu verbinden, das wenigstens zwei Netzwerkeinheiten mit einem einer Vermittlungsstelle zugeordneten Leitungsabschluß verbindet. Bekannt ist hierbei, die Datenübertragung mittels einer sogenannten synchronen, digitalen Hierarchie durchzuführen, bei der innerhalb der zur Übertragung zur Verfügung stehenden Datenrate sogenannte virtuelle Container definiert werden, die jeweils einer Netzwerkeinheit zugeordnet sind. Somit kann jede Netzwerkeinheit entsprechend ihres virtuellen Containers eine Punkt-zu-Punkt-Verbindung innerhalb des Zugangsnetzes aufbauen und hierüber die Datenübertragung erfolgen. Hierbei ist nachteilig, daß durch die feste Zuordnung von virtuellen Containern zu den einzelnen Netzwerkeinheiten eine volle Auslastung der Übertragungskapazität des Zugangsnetzes nur im Ausnahmefall, nämlich wenn alle am Zugangsnetz angeschlossenen Netzwerkeinheiten ihre volle Kapazität ausschöpfen, gegeben ist.

Bekannt ist ferner, lokal vernetzte Computernetze in einem asynchronen Übertragungsmodus zu betreiben. Hierbei erfolgt innerhalb des Netzes eine sternförmige Punkt-zu-Punkt-Verbindung, die je nach Anforderung gerade genutzt oder eben gerade nicht genutzt wird.

Bei dem aus der Veröffentlichung Huterer, M.: "ATM on SDH" bekannten Verfahren sind verschiedene ATM-Service-Übertragungsmöglichkeiten gegeben, die für Quellen variabler Bitrate die Verwendung einer so genannten "Statistical Bit Rate" (SBR), für E-mail-Übertragungen oder dergleichen eine so genannte "Unspecified Bit Rate" (UBR) ohne Servicequalitätsgarantie und für Verbindungen, die eine Überbelegung gestatten, eine so genannte "Available Bit Rate" (ABR) vorsehen, bei der über eine entsprechende Rückmeldung an die Quellen deren Datenaufkommen dynamisch an die gegebenen Bedingungen angepasst wird.

Bei einem aus der EP-A-0 275 679 bekannten Paketvermittlungssystem werden die verschiedenen Vermittlungsknoten und Verbindungen des betreffenden Datenvermittlungsnetzes auf einen jeweiligen Datenstau hin überwacht, der dadurch entsteht, dass die Nutzer Information mit überhöhter Übertragungsrate aussenden. Wird festgestellt, dass ein Paket eines jeweiligen Nutzers mit einer überhöhten Übertragungsrate ausgesandt wird, so wird dieses Paket markiert. Markierte Pakete werden dann an solchen Stellen im Paketvermittlungsnetz eliminiert oder fallen gelassen, an denen ein Datenstau auftritt.

### Vorteile der Erfindung

Das erfindungsgemäße Verfahren mit den im Anspruch 1 genannten Merkmalen bietet den Vorteil, durch eine Kombination eines asynchronen Übertragungsmodus in einem synchronen Dienst die Effizienz der Datenübertragung im Zugangsnetz zu erhöhen. Dadurch, daß die Datenübertragung in einem asynchronen Übertragungsverfahren mittels der in einer synchronen digitalen Hierarchie geordneten Container erfolgt, kann die gesamte zur Verfügung stehende Bandbreite des Zugangsnetzes für eine Übertragung digitaler Daten mit einer garantierten hohen Datenrate genutzt werden. Insbesondere kann die asynchrone Übertragung in bestehende synchron organisierte Zugangsnetze harmonisch integriert werden, ohne daß zusätzliche Aufwendungen, beispielsweise durch die Zurverfügungstellung neuer zu installierender Zugangsnetze, notwendig sind. Insbesondere moderne Breitband-Dienste wie beispielsweise Fast Internet, direkte Email-Zustellung, Fernwartungssteuerung zwischen verschiedenen Teilnehmern können so in einfacher, zuverlässiger und effektiver Weise organisiert werden.

In bevorzugter Ausgestaltung der Erfindung ist vorgesehen, daß das Zugangsnetz in einer Ringtopologie, vorzugsweise in einer Doppelring-Topologie, geschaltet ist. So lassen sich in einfacher Weise bidirektionale Datenübertragungen über das Zugangsnetz realisieren, die eine hohe Verfügbarkeit und eine hohe Redundanz aufweisen. Insbesondere bei einer Doppelring-Topologie lassen sich Störungen und/oder Unterbrechungen des Zugangsnetzes ohne Beeinträchtigung der Datenübertragung überbrücken.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: ein schematisches Blockschaltbild eines Zugangsnetzes zur Übertragung digitaler Daten;
- Figur 2: ein Blockschaltbild einer Netzwerkeinheit;
- Figur 3: ein schematisches Blockschaltbild eines Zugangsnetzes in Doppelring-Topologie und
- Figur 4: das Zugangsnetz gemäß Figur 2 im Störfalle.

### Beschreibung der Ausführungsbeispiele

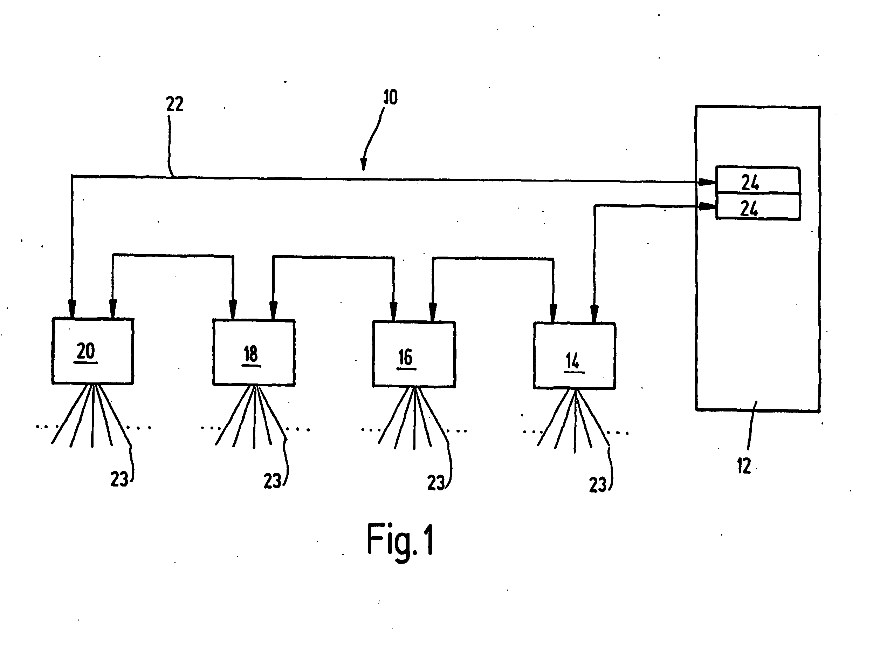

Figur 1 zeigt ein Blockschaltbild zur Übertragung digitaler Daten über ein Zugangsnetz 10. Das Zugangsnetz 10 verbindet einen Leitungsabschluß 12 (line termination) mit Netzwerkeinheiten 14, 16, 18 beziehungsweise 20. Das Zugangsnetz 10 ist als Ringnetz 22 ausgelegt, wobei die Netzwerkeinheiten 14 bis 20 in Reihe in das Ringnetz 22 eingebunden sind. Von den Netzwerkeinheiten 14 bis 20 gehen hier lediglich angedeutete Verbindungsleitungen 23 zu einzelnen Teilnehmeranschlüssen. Üblicherweise sind pro Netzwerkeinheit zirka 400 Teilnehmer angeschlossen. Das Zugangsnetz 10 kann beispielsweise als Lichtwellenleiternetz, als drahtlose Funkverbindung oder über andere geeignete leitungsgebundene Verbindungen aufgebaut sein. Der Leitungsabschluß 12 ist einer nicht dargestellten Vermittlung zugeordnet, die eine Verbindung zu einem dem Zugangsnetz 10 übergeordneten Netz und/oder weiteren Zugangsnetzen herstellen kann.

Die Übertragung digitaler Daten zwischen den Netzwerkeinheiten 14, 16, 18 und/oder 20 und dem Leitungsabschluß 12 erfolgt über in synchroner digitaler Hierarchie geordnete, hier lediglich angedeutete, Container 24. Diese Container 24 sind virtuelle Container, das heißt, diese sind entsprechend einer vorgebbaren Einteilung ringförmig oder kaskadenförmig zwischen den Netzwerkeinheiten 14 bis 20 und dem Leitungsabschluß 12 entsprechend einer insgesamt zur Verfügung stehenden Kapazität des Zugangsnetzes 10 geschaltet. Die Container 24 stehen hierbei allen Netzwerkeinheiten 14, 16, 18 und 20 zur Verfügung. Dies bedeutet, daß alle Netzwerkeinheiten 14 auf jeden der Container 24 entsprechend ihres Übertragungsbedarfs zurückgreifen können. Die zu übertragenden Daten werden hierbei den Containern 24 von den Netzwerkeinheiten 14, 16, 18 beziehungsweise 20 hinzugefügt beziehungsweise aus diesen entfernt (Add/Drop-Verfahren). Entsprechend des asynchronen Übertragungsverfahrens werden die Daten als ATM-Zellen (asynchronus transfer mode) den über das Zugangsnetz 10 ankommenden ATM-Zellen, die lediglich durchgeleitet werden und der eigenen Netzwerkeinheit 14, 16, 18 beziehungsweise 20 nicht bestimmt sind, zugefügt beziehungsweise aus diesen, sofern sie für die Netzwerkeinheiten 14, 16, 18 beziehungsweise 20 bestimmt sind, entnommen.

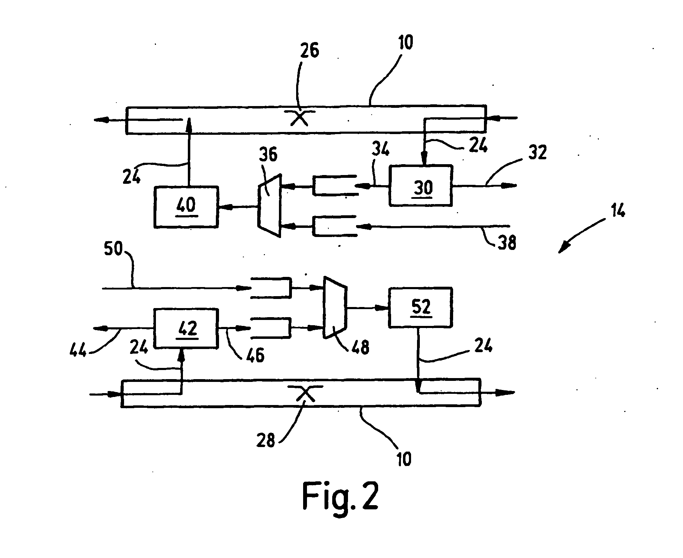

Figur 2 zeigt in einem Blockschaltbild das Entnehmen beziehungsweise Hinzufügen von ATM-Zellen von über das Zugangsnetz 10 übertragenen Containern. Hierbei ist beispielsweise die Netzwerkeinheit 14 dargestellt, die in das Zugangsnetz 10 geschaltet ist. Hierbei ist oben die Übertragung eines Containers 24 von dem Leitungsabschluß 12 und unten die Übertragung eines Containers 24 zu dem Leitungsabschluß 12 verdeutlicht. Somit liegen entsprechend der gezeigten Darstellung rechts der Leitungsabschluß 12 und links die weiteren Netzwerkeinheiten 16, 18 beziehungsweise 20. Die Netzwerkeinheit 14 ist über hier angedeutete Koppler 26 beziehungsweise 28 in das Zugangsnetz 10 eingebunden. Die von dem Leitungsabschluß 12 kommenden Container 24 werden auf einen Eingangsverteiler 30 (Framer) geführt, über den die für die Netzwerkeinheit 14 bestimmten ATM-Zellen 32 entnommen (Drop) und die nicht für die Netzwerkeinheit 14 bestimmten ATM-Zellen 34 einem Multiplexer 36 zugeführt werden. Dem Multiplexer 36 werden gleichzeitig ATM-Zellen 38 der Netzwerkeinheit 14 zugeführt (Add). Über den Multiplexer 36 werden die ATM-Zellen 34 und 38 zusammengeführt und über einen Ausgangsverteiler 40 in dem Zugangsnetz 10 übergebenen Container 24 eingelagert. Somit schleift die Netzwerkeinheit 14 quasi den Container 24 durch, um die für die Netzwerkeinheit 14 bestimmten ATM-Zellen zu entnehmen und von der Netzwerkeinheit 14 für andere Netzwerkeinheiten beziehungsweise Leitungsabschluß 12 bestimmte ATM-Zellen zu übergeben.

In analoger Weise wird mit aus Richtung der Netzwerkeinheiten 16, 18 beziehungsweise 20 übertragenen Container 24 (untere Darstellung in Figur 2) verfahren. Diese werden einem Eingangsverteiler 42 übergeben, wobei die ATM-Zellen 44, die für die Netzwerkeinheit 14 bestimmt sind, entnommen werden (Drop) und ATM-Zellen 46, die nicht für die Netzwerkeinheit 14 bestimmt sind, einem Multiplexer 48 zugeführt werden. Dem Multiplexer 48 werden ferner ATM-Zellen 50 der Netzwerkeinheit 14 zugeführt (Add), die für den Leitungsabschluß 12 beziehungsweise andere Netzwerkeinheiten 16, 18, 20 bestimmt sind. Über einen Ausgangsverteiler 52 wird der Container 24 wieder in das Zugangsnetz 10 eingekoppelt, so daß auch hier quasi ein Durchschleifen der Container 24 und Entnahme beziehungsweise Hinzufügen von ATM-Zellen erfolgt.

Um allen in einem Zugangsnetz 10 eingebundenen Netzwerkeinheiten 14, 16, 18 und 20 einen gleichberechtigten Zugriff auf die Container 24 zu gestatten, ist vorgesehen, daß jeder Netzwerkeinheit 14 eine garantierte Übertragungsrate von ATM-Zellen zugeordnet wird, wobei diese garantierte Übertragungsrate auf die Gesamtkapazität des Zugangsnetzes 10 so abgestimmt ist, daß allen Netzwerkeinheiten 14, 16, 18 und 20 eine gleiche minimale garantierte Übertragungsrate vorgebbar ist. Hierdurch wird sichergestellt, daß bei erhöhtem Übertragungsbedarf einer der Netzwerkeinheiten 14, 16, 18, 20 diese die Container 24 für ihre Übertragung nicht soweit ausnutzen, daß für weitere Netzwerkeinheiten nur noch eine sehr geringe beziehungsweise im Extremfall keine Übertragungsrate mehr zur Verfügung steht. Durch das Vorgeben der garantierten Mindestübertragungsrate wird eine Gleichberechtigung zwischen den Netzwerkeinheiten 14, 16, 18, 20 hergestellt. Wird von den in das Zugangsnetz 10 eingebundenen Netzwerkeinheiten 14, 16, 18 und 20 jeweils die ihnen zur Verfügung stehende Mindestübertragungsrate nicht ausgenutzt, können ein oder andere der Netzwerkeinheiten ihre Übertragungsrate entsprechend erhöhen, ohne daß dies jedoch von vornherein garantiert ist. Hierdurch wird es möglich, die vorhandene Bandbreite beziehungsweise die maximal mögliche zu übertragende Datenrate im Zugangsnetz 10 vollständig auszunutzen. Hierdurch wird es beispielsweise möglich, Punkt-zu-Punkt-Verbindungen über das Zugangsnetz 10 ständig aufgebaut zu lassen, ohne eine bestimmte Bandbreite hierfür zu blockieren. Somit ist jeder Netzwerkeinheit 14, 16, 18 beziehungsweise 20 die Übertragung von Daten mit einer unspezifizierten Bit-Rate möglich, die beispielsweise auch über einer minimal garantierten Übertragungsrate liegen kann. Eine derartige unspezifizierte Bit-Rate, die teilweise über einer garantierten Übertragungsrate liegen kann, läßt sich in einfacher Weise in den Netzwerkeinheiten implementieren, indem man den zu übertragenden ATM-Zellen, die über der garantierten Übertragungsrate liegen, ein Kennzeichnungs-Bit setzt. Werden nun von anderen Netzwerkeinheiten 14, 16, 18, 20 ATM-Zellen über ihre garantierte Übertragungsrate angefordert, so daß die Gesamtübertragungsrate des Zugangsnetzes 10 überschritten würde, werden die mit dem Kennzeichnungs-Bit gesetzten ATM-Zellen verworfen oder im Extremfall auf die der jeweiligen Netzwerkeinheit zugeordneten, garantierten Übertragungsrate zurückgesetzt.

Ferner ist vorgesehen, den Netzwerkeinheiten 14, 16, 18 und/oder 20 neben der undefinierten Bit-Rate eine konstante Bit-Rate für eine Datenübertragung auf Wunsch zuzuordnen. Den eine konstante Übertragungsrate nutzenden Diensten kann hierbei ein gesonderter Satz, innerhalb der zur Verfügung stehenden Bandbreite, von virtuellen Kanalverbindungen zugewiesen werden, über die eine Prioritätsfestlegung der Daten-übertragung von Diensten mit der garantierten Übertragungsrate und/oder von Diensten mit der undefinierten, über der garantierten Übertragungsrate liegenden Diensten möglich ist. Hierbei kann als Prioritätenreihenfolge festgelegt sein, daß die Übertragung mit der garantierten Datenrate einer Übertragung mit festgelegter konstanter Datenrate vorzuziehen ist und diese wiederum einer Datenübertragung von Diensten mit der undefinierten Übertragungsrate vorgeht. Somit besitzt die Übertragung von Diensten mit der undefinierten Datenrate mit einer Bit-Rate über der minimal garantierten Datenrate die niedrigste Priorität. Es ist selbstverständlich, daß innerhalb des gesamten Zugangsnetzes 10 die Summe der garantierten Raten so zu vergeben sind, daß die maximale Übertragungskapazität des Zugangsnetzes 10 nicht überschritten werden kann.

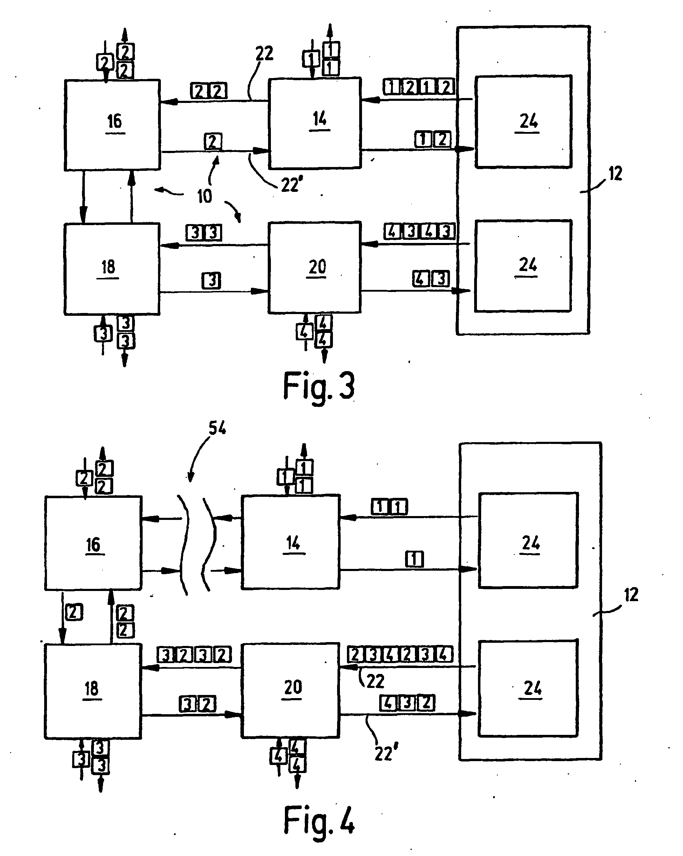

Anhand der Figuren 3 und 4 wird eine spezielle Betriebsweise des Zugangsnetzes 10 erläutert. Hierbei sind die Netzwerkeinheiten 14 mit dem Leitungsabschluß 12 über ein Zugangsnetz 10 verbunden, das ein doppeltes Ringnetz 22 aufweist, das heißt, die Netzwerkeinheiten 14 sind über zwei Ringnetze 22 beziehungsweise 22' miteinander verbunden, wobei die Ringnetze 22 und 22' in entgegengesetzter Richtung betrieben werden. Figur 3 zeigt hierbei das Zugangsnetz 10 im normalen Betrieb, während Figur 4 das Zugangsnetz 10 im Betrieb während einer Unterbrechung 54 zeigt.

Zur Verdeutlichung der Betriebsweise des Zugangsnetzes 10 sind mit 1, 2, 3 beziehungsweise 4 ATM-Zellen angedeutet, die entsprechend der erläuterten Container 24 zu den beziehungsweise von den Netzwerkeinheiten 14, 16, 18 beziehungsweise 20 zu übertragen sind. Die ATM-Zellen 1 sind hierbei dem der Netzwerkeinheit 14, die ATM-Zellen 2 der Netzwerkeinheit 16, die ATM-Zellen 3 der Netzwerkeinheit 18 und die ATM-Zellen 4 der Netzwerkeinheit 20 zugeordnet. Entsprechend des anhand von Figur 2 erläuterten Add/Drop-Verfahrens werden an jeder Netzwerkeinheit 14, 16, 18 beziehungsweise 20 die für diese Netzwerkeinheit bestimmten ATM-Zellen entnommen und die weiteren, für andere Netzwerkeinheiten bestimmten ATM-Zellen durchgeschleust. Gleichzeitig werden dem Container 24 die über die Netzwerkeinheiten 14, 16, 18 beziehungsweise 20 zu übertragenden ATM-Zellen hinzugefügt. Anhand der Netzwerkeinheit 14 in Figur 3 soll dies erläutert werden. Von dem Leitungsabschluß 12 werden der Netzwerkeinheit 14 ATM-Zellen 1 und 2 übertragen. Die ATM-Zellen 1 werden ausgekoppelt, während die ATM-Zellen 2 durchgeschleust und der Netzwerkeinheit 16 zugeführt werden. Gleichzeitig werden bei Übertragung in Richtung des Leitungsabschlusses 12 die von der Netzwerkeinheit 16 übertragene ATM-Zelle 2 durchgeschleust und eine eigene ATM-Zelle 1 hinzugefügt. Die anderen Netzwerkeinheiten 14 werden analog betrieben, wobei jeder Netzwerkeinheit 14 innerhalb des Zugangsnetzes 10 eine Vorzugsrichtung zugeordnet ist, die im Normalfalle von der kürzesten Übertragungsstrecke von der jeweiligen Netzwerkeinheit zum Leitungsabschluß 12 bestimmt wird.

Wird das Zugangsnetz 10 nunmehr - wie in Figur 4 dargestellt - an beliebiger Stelle durch eine Unterbrechung 54 unterbrochen, wird die Übertragung der ATM-Zellen automatisch auf das jeweils andere Ringnetz 22 beziehungsweise 22' übertragen, um so eine Verbindung zwischen den Netzwerkeinheiten 14, 16, 18 beziehungsweise 20 in dem Leitungsabschluß 12 aufrechtzuerhalten. Durch diese Umschaltung für beliebige Punkt-zu-Punkt-Verbindungen innerhalb des Zugangsnetzes 10 beziehungsweise über den Leitungsabschluß 12 zu einem übergeordneten Netz kann eine volle Redundanz erzielt werden. Sobald die für den Normalfall festgelegte Vorzugsrichtung der Datenübertragung durch die Unterbrechung 54 nicht mehr verfügbar ist, wird auf Übertragung der ATM-Zellen in die andere Richtung umgeschaltet. Wie anhand von Figur 4 deutlich wird, werden bei angenommener Unterbrechung 54 zwischen den Netzwerkeinheiten 14 und 16 in Richtung der Netzwerkeinheit 14 nur noch die ATM-Zellen 1 übertragen und aus Richtung der Netzwerkeinheit 14 vor dieser auch nur noch ATM-Zellen 1 übertragen. Die für die Netzwerkeinheit 16 bestimmten ATM-Zellen 2 werden nunmehr über den Umweg über die Netzwerkeinheiten 20 und 18 zur Netzwerkeinheit 16 übertragen. In analoger Weise werden die von der Netzwerkeinheit 16 zum Leitungsabschluß 12 zu übertragenden ATM-Zellen 2 über das Ringnetz 22' über die Netzwerkeinheiten 18 und 20 zum Leitungsabschluß 12 übertragen.

Eine Erkennung der Unterbrechung 54 kann entweder zentral über den Leitungsabschluß 12 erfolgen, wobei dann entsprechende Anweisungen für die Umkehr der Übertragungsrichtung an alle Netzwerkeinheiten 14, 16, 18 beziehungsweise 20 gegeben werden. Andererseits können die Netzwerkeinheiten 14, 16, 18 beziehungsweise 20 so ausgelegt sein, daß diese selber die Unterbrechung 54 erkennen. Von den Netzwerkeinheiten 14, 16, 18 und 20 wird gleichzeitig durch die Umschaltung eine mögliche Überlastung der Übertragungsrate der festgelegten Vorzugsrichtung erkannt, so daß diese automatisch ihre zu übertragende Datenrate reduzieren, um die nun zusätzlich zu übertragenden ATM-Zellen der in ihrer Vorzugsrichtung umgeschalteten Netzwerkeinheiten 14, 16, 18 beziehungsweise 20 zu ermöglichen.

## Patentansprüche

1. Verfahren zur Übertragung digitaler Daten zwischen wenigstens zwei Netzwerkeinheiten und einem Leitungsabschluss, wobei die Netzwerkeinheiten mit dem Leitungsabschluss über ein Zugangsnetz verbunden sind, die Übertragung der Daten über in einer synchronen, digitalen Hierarchie geordnete Container, im folgenden SDH-Container genannt, erfolgt, die Datenübertragung in einem asynchronen Übertragungsverfahren durch in die SDH-Container (24) einlagerbare ATM-Zellen (asynchronus transfer mode) erfolgt, jeder Netzwerkeinheit (14, 16, 18, 20) eine minimale garantierte Übertragungsrate zugeordnet wird, bei Nichtauslastung der maximal möglichen Übertragungsrate des Zugangsnetzes (10) wenigstens eine der Netzwerkeinheiten (14, 16, 18, 20) eine über der minimal garantierten Übertragungsrate liegende Übertragungsrate nutzen kann und den Netzwerkeinheiten (14, 16, 18, 20) eine konstante Übertragungsrate zuordbar ist,
**dadurch gekennzeichnet,**
**dass** über der garantierten Übertragungsrate hinaus zu übertragende ATM-Zellen mit einem Kennzeichnungsbit versehen werden, so dass diese ATM-Zellen bei Überschreiten einer maximalen Auslastung des Zugangsnetzes (10) bis auf die garantierte Übertragungsrate zurückgesetzt werden können, wobei den Netzwerkeinheiten (14, 16, 18, 20) eine Prioritätsreihenfolge zur Übertragung von Daten mit einer konstanten Übertragungsrate, einer minimal garantierten Übertragungsrate und/oder einer undefinierten Übertragungsrate vorgebbar ist, die über der minimal garantierten Übertragungsrate liegen kann.

2. Verfahren nach Anspruch 1,
**dadurch gekennzeichnet,**
**dass** jede Netzwerkeinheit (14, 16, 18, 20) den SDH-Containern (24) eigene ATM-Zellen (32, 38, 44, 30) entnimmt beziehungsweise hinzufügt und andere Netzwerkeinheiten (14, 16, 18, 20) beziehungsweise dem Leitungsabschluss (12) zugeordnete ATM-Zellen (34, 46) durchleitet.

3. Verfahren nach Anspruch 1 oder 2,
**dadurch gekennzeichnet,**
**dass** die Datenübertragung bidirektional über ein Zugangsnetz (10) mit doppeltem Ringnetz (22, 22') erfolgt.

4. Verfahren nach einem der vorhergehenden Ansprüche,
**dadurch gekennzeichnet,**
**dass** die Ringnetze (22, 22') in entgegengesetzter Übertragungsrichtung betrieben werden.

5. Verfahren nach einem der vorhergehenden Ansprüche,
**dadurch gekennzeichnet,**
**dass** jeder Netzwerkeinheit (14, 16, 18, 20) eine Vorzugsrichtung zur Datenübertragung in dem Zugangsnetz vorgegeben wird.

6. Verfahren nach einem der vorhergehenden Ansprüche,
**dadurch gekennzeichnet,**
**dass** bei Unterbrechung des Zugangsnetzes (10) die Datenübertragung auf die von der Vorzugsrichtung abweichende Übertragungsrichtung umgeschaltet wird.

## Claims

1. A method for the transmission of digital data between at least two network units and a line termination, wherein the network units are connected to the line termination via an access network, wherein the transmission of the data takes place via containers ordered in a synchronous digital hierarchy, called SDH containers in the following, wherein the data transmission takes place in an asynchronous transmission process by ATM (asynchronous transfer mode) cells emplaceable into the SDH containers (24), wherein a minimal guaranteed transmission rate is associated with each network unit (14, 16, 18, 20), wherein at least one of the network units (14, 16, 18, 20) can utilise a transmission rate lying above the minimum guaranteed transmission rate on a non fully utilised capacity of the maximum possible transmission rate of the access network (10), and wherein a constant transmission rate can be associated with the network units (14, 16, 18, 20),
**characterised in that**
ATM cells to be transmitted beyond the guaranteed transmission rate are provided with a code bit so that these ATM cells can be reset to the guaranteed transmission rate on the exceeding of a maximum capacity of the access network (10), with a priority order being able to be preset for the network units (14, 16, 18, 20) for the transmission of data at a constant transmission rate, at a minimum guaranteed transmission rate and/or at a non-defined transmission rate, which can lie above the minimum guaranteed transmission rate.

2. A method in accordance with claim 1, **characterised in that** each network unit (14, 16, 18, 20) removes or adds their own ATM cells (32, 38, 44, 30) from or to the SDH containers (24) respectively and conducts other network units (14, 16, 18, 20) or ATM cells (34, 46) associated with the line termination (12).

3. A method in accordance with claim 1 or claim 2, **characterised in that** the data transmission takes place bidirectionally over an access network (10) with a double loop network (22, 22').

4. A method in accordance with any one of the preceding claims, **characterised in that** the loop networks (22, 22') are operated in opposite transmission directions.

5. A method in accordance with any one of the preceding claims, **characterised in that** a preferred direction for the data transmission in the access network is preset for each network unit (14, 16, 18, 20).

6. A method in accordance with any one of the preceding claims, **characterised in that,** when the access network (10) is interrupted, the data transmission is switched over to the transmission direction differing from the preferred direction.

## Revendications

1. Procédé de transmission de données numériques entre aux moins deux unités de réseau et une terminaison de ligne, dans lequel les unités de réseau sont reliées à la terminaison de ligne par un réseau d'accès, dans lequel la transmission des données se produit à l'aide de conteneurs placés dans une hiérarchie numérique synchrone, ci-après appelé conteneurs SDH, dans lequel la transmission des données se produit dans un procédé de transmission asynchrone via des cellules ATM (pour « *Asynchronous Transfer Mode* » - Mode de transfert asynchrone) pouvant être insérées dans les conteneurs SDH (24), dans lequel un débit de transmission minimal garanti est attribué à chaque unité de réseau (14, 16, 18, 20), dans lequel, en cas de non-épuisement des débits de transmission maximaux possibles sur le réseau d'accès (10), au moins une des unités de réseau (14, 16, 18, 20) peut utiliser un débit de transmission supérieur au débit de transmission minimal garanti et dans lequel un débit de transmission constant peut être attribué aux unités de réseau (14, 16, 18, 20),
**caractérisé en ce que**
les cellules ATM à transmettre au-delà des débits de transmission garantis sont dotées d'un bit d'identification, si bien que ces cellules ATM, en cas de dépassement d'une charge maximale du réseau d'accès (10), peuvent être désarmées pour revenir aux débits de transmission garantis, dans lequel il est possible d'attribuer aux unités de réseau (14, 16, 18, 20) une séquence de priorité pour la transmission de données avec un débit de transmission constant, un débit de transmission minimal garanti et/ou un débit de transmission indéfini qui peut être supérieur au débit de transmission minimal garanti.

2. Procédé selon la revendication 1, **caractérisé en ce que** chaque unité de réseau (14, 16, 18, 20) extrait ou insère ses propres cellules ATM (32, 38, 44, 30) dans les conteneurs SDH (24) et laisse passer les cellules ATM (34, 46) attribuées à d'autres unités de réseau (14, 16, 18, 20) ou à la terminaison de ligne (12).

3. Procédé selon la revendication 1 ou 2, **caractérisé en ce que** la transmission de données s'opère de manière bidirectionnelle sur un réseau d'accès (10) avec double réseau en anneau (22, 22').

4. Procédé selon l'une des revendications précédentes, **caractérisé en ce que** les réseaux en anneau (22, 22') sont exploités dans des directions de transmission opposées.

5. Procédé selon l'une des revendications précédentes, **caractérisé en ce qu'**une direction préférentielle est attribuée à chaque unité de réseau (14, 16, 18, 20) pour la transmission de données sur le réseau d'accès.

6. Procédé selon l'une des revendications précédentes, **caractérisé en ce que,** en cas d'interruption du réseau d'accès (10), la transmission des données est commutée sur la direction de transmission opposée à la direction préférentielle.
